**Europäisches Patentamt**

**European Patent Office**

**Office européen des brevets**

(19)

(11) Publication number : **0 625 764 A2**

## (12) EUROPEAN PATENT APPLICATION

(21) Application number : **94303486.8**

(22) Date of filing : **16.05.94**

(51) Int. Cl.⁵ : **G06K 9/68**

(30) Priority : **17.05.93 US 62830**

(43) Date of publication of application : **23.11.94 Bulletin 94/47**

(84) Designated Contracting States : **DE FR GB IT**

(71) Applicant : **CANON KABUSHIKI KAISHA 30-2, 3-chome, Shimomaruko, Ohta-ku Tokyo (JP)**

(72) Inventor : **Avi-Itzhak,Hadar No 239, 1600 Villa Street Mountain View California 94041 (US)**

(74) Representative : **Beresford, Keith Denis Lewis et al BERESFORD & Co. 2-5 Warwick Court High Holborn London WC1R 5DJ (GB)**

(54) **Accelerated OCR classification.**

(57) A comparison function based OCR method is employed for recognizing the nearest neighbor classification of an input vector S with respect to a library of T template vectors. The input vector S defines an unclassified symbol (the unknown input letter) and the T template vectors define the pre-classified characters (known letters of an alphabet font in memory). Nearest neighbor classification is an iterative OCR matching technique in which the closest match between the input vector and the template vectors is recognized by the exclusion of distant templates. The closest match (the nearest neighbor) is accepted as the proper identification of the input symbol. The OCR method is accelerated by employing the Triangle of Inequality Principle which excludes distant neighbors in bulk as the iteration cycles proceed. The sequence of selection of template vectors from the diminishing candidate group may be random or ordered. Ordered selections optimize the exclusion process resulting in a nearest neighbor classification of the input symbol with fewer iterations. The ordering may be based on the frequency of use of the template characters, or on "historical inference", the statistical likelihood that any known character will be followed (or preceded) by any particular character remaining in the candidate group.

Providing the Input Vector S

↓

Providing the Library of T Templates

↓

Selecting an Initial Template Vector 1stTi

↓

Comparing the Initial Template Vector 1stTi

↓

Determining an Initial Comparison Value Range 1stR

↓

Providing Inter—Template Comparisons

↓

Identifying Template Vectors

↓

Selecting a Second Template Vector 2ndTi

↓

Comparing the Second Template Vector 2ndTi

↓

Providing Inter—Template Comparisons

↓

Identifying Template Vectors

↓

Repeating

Fig 2

EP 0 625 764 A2

This invention relates to the OCR classification of input symbols, and more particularly to comparison function based nearest neighbor classification.

Heretofore, comparison functions have been employed to classify input character bit maps against a library template bit maps. The summation of all of the pixel comparisons in each of the input/template matches produced correlation values which revealed the closest match.

The present invention employs inter-template comparisons and the "Triangle of Inequality Principle" in order to exclude distant templates and accelerate the recognition procedure.

European patent application no. 93306854.6 entitled Method and Apparatus for RECOGNITION TEMPLATE ENHANCEMENT, teaches the use of a comparison function to enhance a library of templates with respect to the particular font of the input characters.

European patent application no. 94300472.1 entitled RECOGNITION TEMPLATE ENHANCEMENT, teaches enhancement of library templates with a provision for template sub-classes to accommodate multiple fonts and other variations in the input characters.

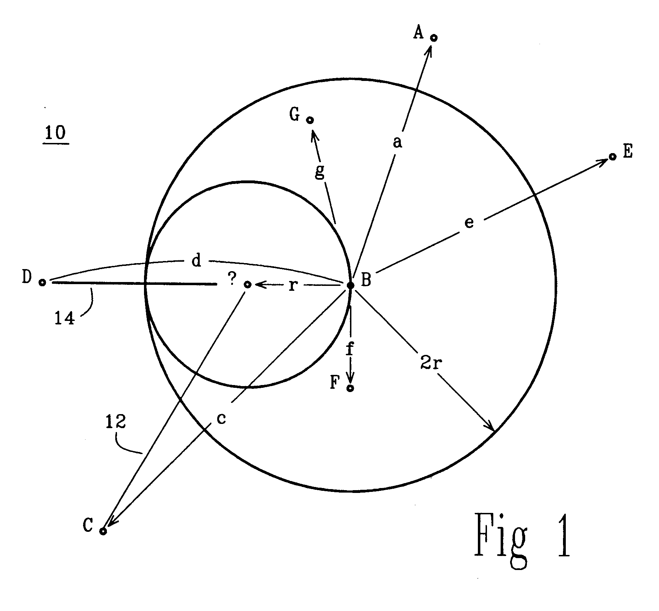

A publication entitled "A Fast Nearest Neighbor Search Algorithm" by Michael T. Orchard appearing in IEEE ICASSP conference at Toronto Canada 14-17 May 1991 (pages 2297-2300 Vol 4) teaches a nearest neighbor search. The Orchard disclosure involves a speech codebook and color quantization of images employing the Triangle of Inequality Principle (Figure 1 on page 2298).

In a first aspect, the invention aims to provide an improved comparison function based OCR vector recognition method to recognize the nearest neighbor.

In another aspect, the invention aims to provide such a comparison function based method which is accelerated by employing the Triangle of Inequality Principle.

In yet another aspect, the invention aims to provide such a comparison function based method in which inter-template comparison values are pre-compared and stored for immediate use.

In yet another aspect the invention aims to provide such a comparison function based method in which the template vector selection for each iteration is method driven.

In one particular embodiment, the invention provides a comparison function based OCR method of recognizing the nearest neighbor classification of an input vector S with respect to a library of T template vectors. The input vector S defines an unclassified symbol to be recognized, and the library of T template vectors define pre-classified characters available for matching. The input vector S is a sequence of elements, each element having a numerical value. Each of the template vectors ($T_1$, $T_2$, ... $T_i$ ... $T_T$) is also a sequence of elements having numerical values. An initial template vector $1stT_i$ is selected from the library and compared with the input vector S based on an input comparison function to generate an initial input comparison value 1stV. An initial comparison value threshold 1stR is determined as a function of the initial input comparison value 1stV. Inter-template comparison values are provided between the initial template vector $1stT_i$ and the T-1 other template vectors ($T_1$, $T_2$ .... $T_T$) based on an inter-template comparison function. Template vectors within the library having an inter-template comparison value within the initial comparison value threshold 1stV are identified to form a first candidate group 1stG of template vectors. The group includes the nearest neighbor classification of to the input vector S, and excludes template vectors having an inter-template comparison value outside the value threshold. A second template vector $2ndT_i$ is selected from the first candidate group 1stG, and compared with the input vector S to generate a second input comparison value 2ndV, Inter-template comparison values are provided between the second template vector $2ndT_i$ and the non-selected template vectors within the first candidate group 1stG. The template vectors within the first candidate group 1stG having an inter-template comparison value within a value threshold determined by the second input comparison value 2ndV are identified to form a second candidate group 2ndG. The second group includes the nearest neighbor classification of the input vector S, and excludes template vectors from the first candidate group 1stG outside the value threshold. The second group also excludes all of the template vectors excluded in the previous identification step. The selecting step and the comparing step and the determining step and the providing inter-template comparison values step and the identifying step are repeated until all of the template vectors have been excluded except a single final template vector $FinT_i$ which is the nearest neighbor classification of the input vector S.

BRIEF DESCRIPTION OF THE DRAWING

Further objects and advantages of the present method will become apparent from the following detailed description and drawing in which:

FIGURE 1 is a two dimensional rendition of multi-dimensional space showing pre-classified characters;

FIGURE 2 is a flow chart showing the primary steps of the iterative OCR method;

FIGURE 3 is a pairwise table showing a full complement of TxT inter-template comparison values;

FIGURE 4 is a pairwise table showing a non-redundant complement of ($T^2$-T)/2 inter-template comparison values;

FIGURE 5 is a pixel matrix (bit map) of the input symbol "?" showing foreground and background pixels; and

FIGURE 6 is a pixel matrix (bit map) of the selected template "B" showing foreground and background pixels.

## GENERAL EMBODIMENT (Figure 1)

A comparison function based OCR method is employed for recognizing the nearest neighbor classification of an input vector S with respect to a library of T template vectors. The input vector S defines an unclassified symbol (the unknown input letter) and the T template vectors define the pre-classified characters (known letters of an alphabet font in memory). Nearest neighbor classification is an iterative OCR matching technique in which the closest match between the input vector and the template vectors is recognized by the exclusion of distant templates. The closest match (the nearest neighbor) is accepted as the proper identification of the input symbol. The OCR method is accelerated by employing the Triangle of Inequality Principle which excludes distant neighbors in bulk as the iteration cycles proceed.

The unclassified symbol and each pre-classified characters may be viewed as a point in a multi-dimensional space of E dimensions. Each character is defined by a template vector having E elements extending through the E dimensional space. The template vectors has $E_t$ dimensional elements and the input vector S has $E_s$ dimensional elements. Figure 1 shows a representative collection of pre-classified characters (points "A", "B", "C", "D", "E", "G", and "F") presented in two dimensional plane 10 (E = 2). Each character is defined by a two element template vector (X,Y) extending from the origin of the two dimensional coordinate system of plane 10. The position of the character points in plane 10 is for illustration only, and does not reflect the actual nearest neighbor relationship of any particular alphabet font within any given E dimensional space. The point for the unknown symbol is represented by the question mark "?", and the related input vector S is also a two element vector.

The iterative comparison function based method is initiated by selecting one of the template vectors, B for instance. The initially selected template vector is compared with the input vector S (?) and with each of the other template vectors (A, C, D, E, F, and G) by means of the comparison function. The inter-template comparison values generated by this initial B comparison are the mutual distances ("a", "c", "d", "e", "f", and "g", lower-case) between the selected point B and the other template points. The input comparison value is the distance ("r") between the selected point B and the input point ?.

The Triangle of Inequality Principle may be applied to a triangle formed by point B, point "?" and any other template point (such as point C - see triangle 12). The principle stipulates that all template points outside of a circle of radius "2r" from the B point (such as point C) are more distant neighbors from point B than the input point "?". That is, the inter-template comparison value "c" is greater than two times the input comparison value "r", and is therefor excluded as the nearest neighbor. In the case of point D which is in line with point B and point "?", the Triangle of Inequality becomes the straight line BD (see line 14). Line BD includes point "?" near the middle, and is formed by line segments B? and ?D ("r").

The distant points may be excluded because the underlying characters can not be the nearest neighbor match with the unknown character "?". Thus, in the fictional example of Figure 1, characters A, C, D, and E have an inter-template comparison value greater than 2r and are excluded from the next iteration cycle reducing the candidates to F and G.

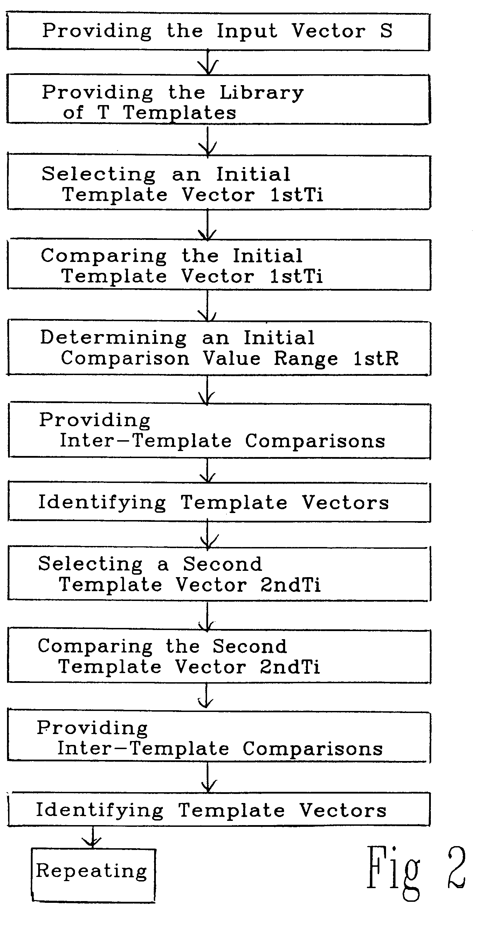

## GENERAL METHOD (Figure 2)

The steps of the iterative comparison function based OCR method are summarized in Figure 2 and described in detail below.

Providing the input vector S of the unclassified symbol in the form of a sequence of elements, each element having a numerical value.

Providing the library of T template vectors ($T_1$, $T_2$, ... $T_i$ ... $T_T$) in the form of T sequences of elements, each element having a numerical value. The numerical values of the input vector elements and template vector elements may be the intensity levels (greyscale) of the pixels within a pixel image (see Pixel Matrix section). Alternatively, the numerical value of each element may be the number value of a distinguishing structure included in an OCR feature set (see Visual Aspects Section). Other less visible recognition parameters (such as moments) involving a series of numbers may be employed to form the elements of the vectors.

Selecting an initial template vector $1stT_i$ from the library of T template vectors. The selection may be completely random. That is, any template vector in the library (or in the subsequent smaller candidate groups) may be the initial vector (or the selected vector). The order of the selection may be a fixed but arbitrary sequence associated with the library, such as for example the alphabetical sequence A-Z, then a-z, and then 0-9, etc. In such a fixed sequence, the same template vector is always the initial vector, and the subsequently selected vectors follow the same order subject to the progressive exclusion of template vectors due to the Triangle of Inequality Principle. Alternatively, the selection may be method driven such as frequency of use (F/U) or historical inference (HI) as described in the Selection Ordering section).

Comparing the initial template vector $1stT_i$ with the input vector S based on an input comparison function to generate an initial input comparison value 1stV. The comparison function is a mathematical relationship for systematically combining the elements of the input vector S with the elements of each selected template vector to generate a progression of scaler input comparison values. Units are not applicable to the comparison values because they are used for comparison of like entities. The comparison function may be a dissimilarity type function (see Dissimilarity Function section) which quantifies the differences between the compared vectors. Alternatively, the comparison function may be a similarity type function (see Similarity Function section) which quantifies the similarities between the compared vectors.

Determining an initial comparison value threshold 1stR as a function of the initial input comparison value 1stV. The value threshold may be simply twice the input comparison value as employed the dissimilarity comparison function (see Figure 1), or a more complex relationship for other types of comparison functions.

Providing an inter-template comparison value between the initial template vector $1stT_i$ and each of the T-1 other template vectors ($T_1$, $T_2$ .... $T_T$) based on an inter-template comparison function. The inter-template comparison values are also scalers. The inter-template comparison function may be identical to the input comparison function, or mathematically equivalent to the input comparison function.

Identifying template vectors within the library of T templates having an inter-template comparison value within the initial comparison value threshold 1stV. This first identification step forms a first candidate group 1stG of template vectors which includes the nearest neighbor classification of to the input vector S with respect to the library of T templates. The first candidate group excludes template vectors having an inter-template comparison value outside the value threshold.

Selecting a second template vector $2ndT_i$ from the first candidate group 1stG.

Comparing the second template vector $2ndT_i$ with the input vector S based on the input comparison function to generate a second input comparison value 2ndV.

Providing an inter-template comparison value between the second template vector $2ndT_i$ and the non-selected template vectors within the first candidate group 1stG based on the inter-template comparison function.

Identifying template vectors within the first candidate group 1stG having an inter-template comparison value within a value threshold determined by the second input comparison value 2ndV. This second identification step forms a second candidate group 2ndG of template vectors which includes the nearest neighbor classification of the input vector S. The second candidate group excludes template vectors from the first candidate group 1stG having an inter-template comparison value outside the value threshold; and also excludes all of the template vectors excluded in the previous identifying step.

Repeating the selecting step and the comparing step and the determining step and the providing inter-template comparison values step and the identifying step until all of the template vectors have been excluded except a single final template vector $FinT_i$. The one remaining template vector is the nearest neighbor classification of the input vector S with respect to the library of T template vectors.

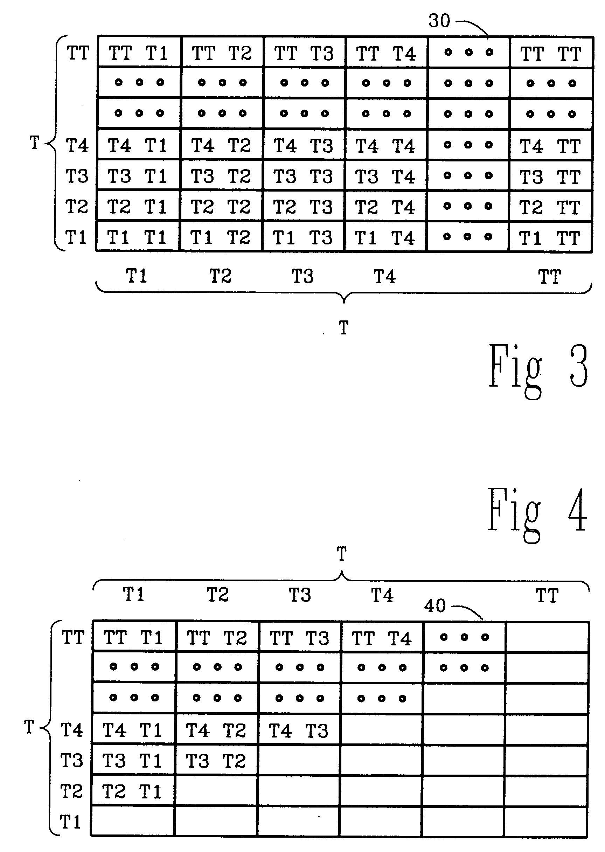

PAIRWISE MEMORY (Figures 3 and 4)

The spacial relationship between the T template vectors within the E dimensional space remains the same as new input symbol vectors are provided for matching. Each of the inter-template comparison values ($T_i$ $T_j$) is therefore constant, and may be pre-compared and stored in a memory device for immediate use during the iteration cycles. A full complement of inter-template comparison values ($T_1$ $T_1$ $T_1$ $T_2$ $T_T$ $T_T$) may be stored in a T by T pairwise memory 30 which has T rows and T columns (see Figure 3) and includes $T^2$ entries. All of the inter-template comparison values paired with a selected template vector may be retrieved immediately by addressing the row (or column) of the selected template vector.

In the T by T memory 30, every inter-template comparison value appears twice (once by row and once by column). The trivial self comparison values between the same template vector ($T_1$ $T_1$ $T_2$ $T_2$ .. $T_i$ $T_i$ .. $T_T$ $T_T$) are included along the diagonal. These trivial comparison values have minimum values (zeros for example) for a dissimilarity function and maximum values (ones for example) for a similarity function. A non-redundant complement of inter-template comparison values stored in truncated memory 40 (see Figure 4) include $(T^2-T)/2$ entries. Each inter-template comparison value appears once (by row only), and the trivial comparison values have been eliminated.

4

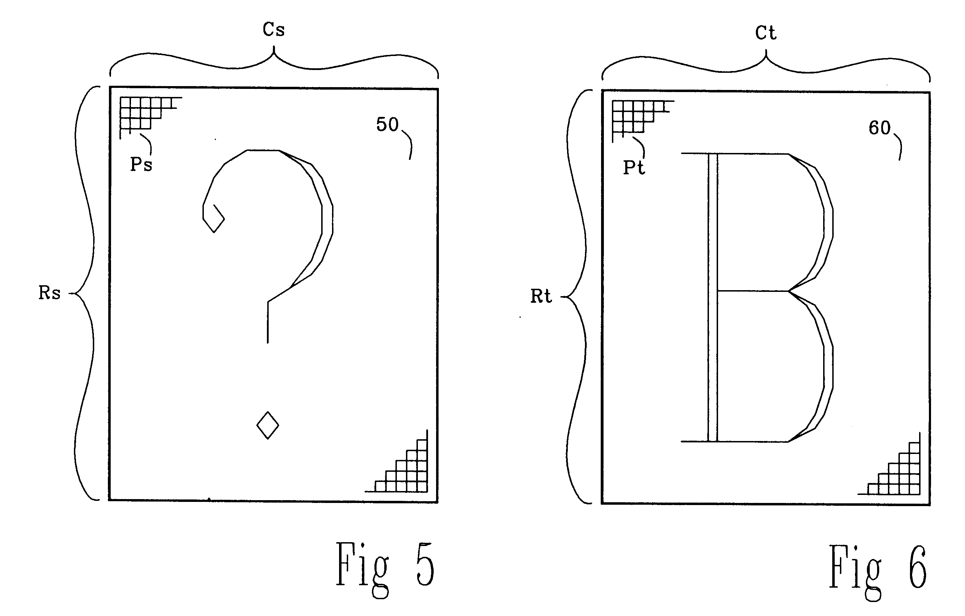

PIXEL MATRIX (Figures 5 and 6)

The input vector S and the template vectors may define the input unclassified symbol and the pre-classified characters in a directly visible image format of such as a pixel matrix. In Figure 5 the input symbol is shown as the symbol "?", and in Figure 6 the selected template vector is shown as the character "B". The images are contained in the contrast difference between foreground pixels and background pixels stored as digital data in a pixel bit map memory. Each element is stored as one pixel. The foreground and background may be black and white data in a binary format, or intensity (or shade) level data in greyscale (or color) format.

The input vector matrix 50 (see Figure 5) has $P_s$ pixel elements and each template vector matrix 60 (see Figure 6) has $P_t$ pixel elements. The unclassified symbol may be defined by the input vector matrix at the same pixel resolution as the pre-classified characters are defined by the template vectors. In this equal resolution case, the number of pixels $P_s$ in the input vector matrix is equal to the number of pixels $P_t$ in the template vector matrix. The pixel image of the input vector is a pixel matrix having $R_s$ rows and $C_s$ columns, and the pixel image of each of the T template vectors is a pixel matrix having $R_t$ rows and $C_t$ columns. Preferably, the number of rows $R_s$ and columns $C_s$ in the pixel image of the input vector is equal to the number of rows $R_t$ and columns $C_t$ in the pixel image of each of the T template vectors. Alternatively, the unclassified symbol may be defined at a different pixel resolution than the pre-classified characters; in which case $P_s$ (and $R_s$ and $C_s$) will not be equal to $P_t$ (and $R_t$ and $C_t$).

The resolution of the unclassified input symbol may be a multiple "m" of the resolution of the pre-classified template characters. In this multiple resolution case, the number of pixel $P_s$ in the input vector matrix is a multiple "m" of the number of pixels $P_t$ in the template vectors. For example $P_s$ may have 2400 pixels (in a 60 row by 40 column matrix) and $P_t$ may have only 600 pixels (in a 30 row by 20 column matrix) with a multiple of m = 2. The useful resolution of the matrix is a function of the resolution of the scanner employed to image the printed letter into a vector in memory. The 2400 pixel matrix (60x40) may be obtained from a 400 dpi (dots per inch) scanner, and the 600 pixel matrix (30x20) from 200 dpi scanner.

The number of pixels $P_s$ in the input vector matrix may be reduced to match the number of pixels $P_t$ in the template vectors, by substituting an average value for each square group of pixels having "m" pixels on a side. That is, each m by m square of pixels of the input vector matrix may be replaced by a single compound pixel for use in the input comparison function. Alternatively, the number of pixels $P_s$ may be reduced by using only every mth row and every mth column of the input vector matrix.

The resolution of the pre-classified template characters may be a multiple "m" of the resolution of the unclassified input symbol, in which case $P_t$ is a multiple "m" $P_s$. For $P_s$ may have only a 1350 pixels (in a 45 row by 30 column matrix) and $P_t$ may have 12,150 pixels (in a 90 row by 60 column matrix) with a multiple of m = 3. As in the earlier case, $P_t$ may be reduced to match $P_s$ by averaging adjacent pixel elements or by using only every 3rd row and 3rd column.

VISUAL ASPECTS

The sequence of elements in the input vector S may define merely visual aspects of the unclassified symbol, and not the entire image as discussed in the Pixel Image section. The sequence of elements in each of the T template vectors defines corresponding visual aspects of the pre-classified characters. The visual aspects of the input symbol and template characters may be a feature set which includes such distinguishing structures as: overall height, overall width, stroke width, position of major lines, position of minor lines, image density, total foreground (black) pixel count, center of foreground data, and outline of foreground data in terms of distance and angles (walk around).

DISSIMILARITY FUNCTIONS

The comparison function may be a dissimilarity function (as presented in connection with Figure 1) in which the input comparison value generated at each iteration is the Euclidian distance "r" between the selected template vector and the input vector S. The comparison value threshold determined at each iteration is from zero to two times the input comparison value generated at that iteration in accordance with the relationship:

$$\text{kth } R = (2) \times (\text{kth } CV) = \text{distance "r"}$$

where

k is the kth iteration cycle of the OCR method,
R is the comparison value threshold for the kth iteration, and
CV is the comparison value for the kth iteration.

The input comparison function for comparing the selected template vector each iteration with the input vector S (and with the other template vectors) may be the subtractive dissimilarity function:

$$CV(s,t) = \sqrt{(s_1 - t_1)^2 + (s_2 - t_2)^2 + .. (s_j - t_j)^2 .. + (s_n - t_n)^2}$$

where

CV is the comparison value generated,

$t_j$ is the jth element of the selected template vector

$s_j$ is the jth element of the input vector S (or other template vector) under comparison, and

n is the number of elements in the vectors.

The inter-template comparison function may be identical to the input comparison function as noted above.

Alternatively, the inter-template comparison function may contain normalization factors (or other adjustment parameters) which renders the inter-template comparison function non-identical (but mathematically equivalent) to the input comparison function.

## SIMILARITY FUNCTIONS

The comparison function may be a similarity function which generates increasing comparison values as the iterations proceed and input vector S approaches the nearest neighbor match. The similarity function is the dot product similarity function:

$$CV = \frac{(s_1.t_1) + (s_2.t_2) + ... (s_j.t_j) ... + (s_n.t_n)}{\sqrt{(s_1^2 + .. s_j^2 + .. s_n^2).(t_1^2 + .. t_j^2 + .. t_n^2)}}$$

where

CV is the comparison value generated,

$t_j$ is the jth element of the selected template vector

$s_j$ is the jth element of the input vector S (or other template vector) under comparison, and

n is the number of elements in the vectors.

The above similarity function is also the cosine of the angle between the selected template vector and the input vector (or other template vector) in the multi-dimensional space. Maximum similarity occurs at an angle of zero and is 1.00 (cosine 0 = 1.00). Minimum similarity occurs at an angle of ninety degrees and is 0.00, for example when all elements are non-negative (cosine 90 = 0.00). In this cosine embodiment, the length of the vectors have been normalized to a common length.

## SELECTION ORDERING

The sequence of selection of template vectors from the diminishing candidate group may be random or ordered. Ordered selection may optimize the exclusion process resulting in a nearest neighbor classification of the input symbol with fewer iterations. The ordering may be based on the frequency of use (F/U) of the template characters in the type of text being processed. Alternatively, the ordering may be based on "historical inference" (HI), the statistical likelihood that any known character will be followed (or preceded) by any particular character remaining in the candidate group. Ordinary English usage may be a suitable ordering basis for most applications. Either of the above two ordering techniques (or other ordering information), will yield successive template selections with the most probable match with the unknown input symbol under the circumstances.

The following three examples show the nearest neighbor accelerated (NNA) classification of the seven letters in the word "Example" (first without ordering, second with F/U ordering, and third with HI ordering). The initial information is baseline data generated without the benefit of NNA, for illustrating the reduction in iterations provided by each of the three acceleration examples. The templates used in the three acceleration examples and the baseline contained the traditional 94 character font:

```
A B C D E F G H I J K L M N O P Q R S T U V W X Y Z
a b c d e f g h i j k l m n o p q r s t u v w x y z
0 1 2 3 4 5 6 7 8 9 ! " # $ % & ' ( ) * + , -
. / : ; < = > ? @ [ \ ] ^ _ ' { | } ~ .
```

BASE LINE (no acceleration) - 658 iterations

(7 inputs) x (94 font templates)

The template selection employed for the base line was the random fixed sequence A-Z, then a-z, then 0-9, then punctuation and related symbols (as listed above).

Random NNA (without ordering) - 232 iterations

| Input Letter | E | x | a | m | p | l | e |
|---|---|---|---|---|---|---|---|
| Number Iterations | 05 | 50 | 27 | 39 | 42 | 38 | 31 |

NNA reduced the number of iterations by a factor of about 3 from the baseline random fixed selection. The selection from the templates remaining after each iteration was the same random fixed order as in the base line above. That is, "E" was the 5th selection, "x" was the 50th, and so forth. Most templates were excluded by NNA long before the fixed selection sequence advanced to their position in the fixed order.

Frequency of Use (F/U) ordered NNA - 131 iterations

| Input Letter | E | x | a | m | p | l | e |
|---|---|---|---|---|---|---|---|
| Number Iterations | 35 | 46 | 03 | 14 | 21 | 11 | 01 |

F/U ordering reduced the number of iterations by a factor of five from the baseline random selection. The character "e" (lower-case) is the most frequently used character in ordinary English usage and was the first selection for each input letter. The last letter of the word "Example" is the input letter "e", and was therefore classified correctly on the first selection. The other input letters required more iterations based on F/U data. The input letter "E" (upper-case) is less common and required 35 iterations. The letter "x" is one of the least frequently used letters and required 45 iterations to classify.

Historical Inference (HI) ordered NNA - 64

| Input Letter | E | x | a | m | p | l | e |
|---|---|---|---|---|---|---|---|
| | t | n | p | n | e | r | e |
| | a | A | t | t | a | e | |
| | o | v | i | r | i | o | |
| | s | u | c | l | o | a | |
| | i | x | a | s | p | l | |
| | w | | | d | | | |
| | h | | | i | | | |
| | c | | | c | | | |
| | .. | | | v | | | |
| | .. | | | m | | | |
| | E | | | | | | |
| Number Iterations | 33 | 05 | 05 | 10 | 05 | 05 | 01 |

HI ordering reduced the number of iterations by a factor of ten from the baseline random selection. The letter "x" appears frequently after the letter "e" (and "E") and was classified after the 5th iteration. Not very many words start with "E" (upper-case), which required 33 iterations. The HI order of template selection for each input letter of the word "Example" is shown under the letter.

CONCLUSION

It will be apparent to those skilled in the art that the invention as described hereinbefore enables a significant improvement to be obtained in the implementation of optical character recognition.

Those skilled in the art will further appreciate that the present disclosure also extends to automatic optical character recognition apparatus, programmed or otherwise constructed to implement the methods described above. The components of such an apparatus can take the well known form of a programmable processor provided with memory for storage of templates, input symbols and output symbols, together with input and output devices such as a scanner, printer, modem and the like.

By providing the methods whereby the comparison with a large library of templates can be accelerated, so that large number of templates are eliminated as much as possible before each iteration, the invention provides greater speed of recognition for a given processor capacity. Of course, specialised processing elements can be used in place of a general purpose processor, if desired.

Clearly various changes may be made in the structure and embodiments shown herein without departing from the concept of the invention. Further, features of the embodiments shown in the various figures may be employed with the embodiments of the other figures.

Therefore, the scope of the invention is to be determined by the terminology of the following claims and equivalents thereof.

## Claims

1. A comparison based OCR method, comprising the following steps:

    providing an input vector S of an unclassified symbol;

    providing a library of T template vectors;

    selecting a template vector from the library of T template vectors;

    comparing the selected template vector with the input vector S and generating an input comparison value:

    determining a comparison value threshold;

    providing inter-template comparison values between the selected template vector and the library;

    identifying template vectors within the library of T templates having an inter-template comparison value within the determined comparison value threshold and forming a candidate group which excludes template vectors having an inter-template comparison value outside the value threshold; and

    repeating the selecting step and the comparing step and the determining step and the providing inter-template comparison values step and the identifying step.

2. A comparison function based OCR method of recognizing the nearest neighbor classification of an input vector S defining an unclassified symbol, with respect to a library of T template vectors defining pre-classified characters, comprising the following steps:

    providing the input vector S of the unclassified symbol in the form of a sequence of elements, each element having a numerical value;

    providing the library of T template vectors $(T_1, T_2, ... T_i ... T_T)$ in the form of T sequences of elements, each element having a numerical value;

    selecting an initial template vector $(1stT_i)$ from the library of T template vectors;

    comparing the initial template vector $(1stT_i)$ with the input vector S based on an input comparison function to generate an initial input comparison value (1stV):

    determining an initial comparison value threshold (1stR) as a function of the initial input comparison value (1stV);

    providing inter-template comparison values between the initial template vector $(1stT_i)$ and the T-1 other template vectors $(T_1, T_2 .... T_T)$ based on an inter-template comparison function;

    identifying template vectors within the library of T templates having an inter-template comparison value within the initial comparison value threshold (1stV); to form a first candidate group (1stG) of template vectors which includes the nearest neighbor classification of the input vector S with respect to the library of T templates, and which excludes template vectors having an inter-template comparison value outside the value threshold;

    selecting a second template vector $(2ndT_i)$ from the first candidate group (1stG);

    comparing the second template vector $(2ndT_i)$ with the input vector S based on the input comparison function to generate a second input comparison value (2ndV);

    providing inter-template comparison values between the second template vector $(2ndT_i)$ and the non-selected template vectors within the first candidate group 1stG based on the inter-template comparison function;

    identifying template vectors within the first candidate group lstG having an inter-template comparison value within a value threshold determined by the second input comparison value (2ndV), to form a second candidate group (2ndG) of template vectors which includes the nearest neighbor classification of the input vector S, and which excludes template vectors from the first candidate group (1stG) having an inter-template comparison value outside the value threshold, and which also excludes all of the template vectors excluded in the previous identifying step;

repeating the selecting step and the comparing step and the determining step and the providing inter-template comparison values step and the identifying step until all of the template vectors have been excluded except a single final template vector (FinT$_i$) which is the nearest neighbor classification of the input vector S with respect to the library of T template vectors.

3. The OCR method of Claim 1 or 2, wherein the inter-template comparison values are stored in a memory means.

4. The OCR method of Claim 3, wherein the inter-template comparison values stored in a memory means are pre-compared.

5. The OCR method of Claim 3, wherein the inter-template comparison values stored in the memory means include T$^2$ entries.

6. The OCR method of Claim 3, wherein the inter-template comparison values stored in the memory means include (T$^2$-T)/2 entries.

7. The OCR method of any preceding claim, wherein the input vector S is formed by E$_s$ elements, and the each of the template vectors is formed by E$_t$ elements.

8. The OCR method of Claim 7, wherein the unclassified symbol is defined by the input vector S at the same resolution as the template vectors, and the number of elements E$_s$ in the input vector S is equal to the number of elements E$_t$ in the template vector.

9. The OCR method of Claim 7, wherein the unclassified symbol is defined by the input vector S at a different resolution than the template vectors, and the number of elements E$_s$ in the input vector S is not equal to the number of elements E$_t$ in the template vectors.

10. The OCR method of Claim 9, wherein the resolution of the unclassified input symbol is a multiple m of the resolution of the template vectors, and the number of elements E$_s$ in the input vector S is a multiple m of the number of elements E$_t$ in the template vectors.

11. The OCR method of Claim 10, wherein the number of elements E$_s$ in the input vector S is reduced to match the number of elements E$_t$ in the template vectors by averaging every m consecutive elements of the input vector S into a single compound element.

12. The OCR method of Claim 10, wherein the number of elements E$_s$ in the input vector S is reduced to match thenumber of elements E$_t$ in the template vectors by using only every mth element of the input vector S.

13. The OCR method of Claim 9 , wherein the resolution of the template vectors is a multiple m of the resolution of the unclassified input symbol, and the number of elements E$_t$ in the template vectors is a multiple m of the number of elements E$_s$ in the input vector S.

14. The OCR method of Claim 13, wherein the number of elements E$_t$ in the template vector is reduced to match the number of elements E$_s$ in the input vector S by averaging every m consecutive elements of the template vectors into a single compound element.

15. The OCR method of Claim 13, wherein the number of elements E$_t$ in the template vectors is reduced to match the number of elements E$_s$ in the input vector S by using only every mth element of the template vectors.

16. The OCR method of any preceding claim, wherein the input comparison function is mathematically equivalent to the inter-template comparison function.

17. The OCR method of Claim 16 , wherein the comparison function is a dissimilarity function, and the input

9

comparison value generated at each iteration is a distance "r" between the selected template vector and the input vector S.

18. The OCR method of any preceding claim, wherein the comparison value threshold determined at each iteration is two times the input comparison value generated at that iteration in accordance with the relationship:

$$\text{kth } R = (2) \times (\text{kth } CV)$$

where

k is the kth iteration cycle of the OCR method,

R is the comparison value threshold for the kth iteration, and

CV is the comparison value for the kth iteration.

19. The OCR method of any preceding claim, wherein the input comparison function for comparing the selected template vector each iteration with the input vector S, is the subtractive dissimilarity function:

$$CV = \sqrt{(s_1 - t_1)^2 + (s_2 - t_2)^2 + .. (s_j - t_j)^2 .. + (s_n - t_n)^2}$$

where

CV is the comparison value generated,

$t_j$ is the jth element of the selected template vector

$s_j$ is the jth element of the input vector S (or other template vector) under comparison, and

n is the number of elements in the vectors.

20. The OCR method of any preceding claim, wherein the comparison function is a similarity function.

21. The OCR method of Claim 20, wherein the similarity function is the dot product similarity function:

$$CV = \frac{(s_1.t_1) + (s_2.t_2) + ... (s_j.t_j) ... + (s_n.t_n)}{\sqrt{(s_1^2 + .. s_j^2 + .. s_n^2).(t_1^2 + .. t_j^2 + .. t_n^2)}}$$

where where

CV is the comparison value generated,

$s_j$ is the jth element of the input vector S,

$t_j$ is the jth element of the template vector under comparison, and

n is the number of elements in the vectors.

22. The OCR method of any preceding claim, wherein the sequence of elements in the input vector S defines visual aspects of the unclassified symbol, and the T sequences of elements in the T template vectors defines corresponding visual aspects of the pre-classified characters.

23. The OCR method of Claim 22, wherein the visual aspects comprise a feature set defining the unclassified symbol and the pre-classified characters.

24. The OCR method of any of claims 1 to 21, wherein the sequence of elements in the input vector S defines an image of the unclassified symbol, and the T sequences of elements in the T template vectors define images of the pre-classified characters.

25. The OCR method of Claim 24, wherein the images defined by the input vector S and the T template vectors are stored as foreground and background digital data in a pixel bit map memory.

26. The OCR method of Claim 25, wherein each element of the input vectors and each element of the T template vectors are stored as one pixel of digital data.

27. The OCR method of Claim 26, wherein the foreground and background digital data is in binary format.

28. The OCR method of Claim 26, wherein the foreground and background digital data is intensity level data in greyscale format.

29. The OCR method of Claim 26, wherein the foreground and background digital data is shade level data in color format.

30. The OCR method of any of claims 26 to 29, wherein the number of pixels $P_s$ in the pixel image of the input vector S is equal to the number of pixels $P_t$ in the pixel images of each of the T template vectors.

31. The OCR method of Claim 30, wherein the pixel image of the input vector S is a pixel matrix having $R_s$ rows and $C_s$ columns, and the pixel image of each of the T template vectors is a pixel matrix having $R_t$ rows and $C_t$ columns.

32. The OCR method of Claim 31, wherein the number of rows $R_s$ in the pixel image of the input vector S is equal to the number of rows $R_t$ in the pixel image of each of the T template vectors, and the number of Columns $C_s$ in the pixel image of the input vector S is equal to the number of columns $C_t$ in the pixel image of each of the T template vectors.

33. The OCR method of any preceding claim, wherein the order of selection of the template vector each iteration from the candidates remaining in the candidate group is a random sequence.

34. The OCR method of any of claims 1 to 32, wherein the order of selection of the template vector each iteration from the candidates remaining in the candidate group is a random fixed sequence.

35. The OCR method of any of claims 1 to 32, wherein the order of selection of the template vector each iteration from the candidates remaining in the candidate group is a sequence based on frequency of use of the pre-classified characters.

36. The OCR method of any of claims 1 to 32, wherein the order of selection of the template vector each iteration from the candidates remaining in the candidate group is a sequence based on historical inference of the pre-classified characters.

37. A method of optical character recognition (OCR) wherein input symbols are compared with pre-stored templates, the method comprising an iterative process in which, following comparison with a currently selected template, inter-template comparison values are used to restrict the set of templates to be considered in future iterations.

38. A method as claimed in claim 37 wherein said iterative process comprises the steps of (a) selecting a current template and comparing it with the input symbol to obtain a comparison value, (b) using said inter-template comparison values, relative to the currently selected template, to eliminate templates from future consideration, in accordance with the obtained comparison value for the input symbol relative to the selected template; (c) selecting a new template from those not eliminated, and repeating steps (a) and (b) until only one template remains.

39. A method according to claim 37 or 38 wherein inter-template comparison values are pre-stored for the set of templates.

40. A method according to claim 37, 38 or 39 wherein for each iteration the selected template is chosen with reference to expected statistics of a series of input symbols.

41. An apparatus for performing optical character recognition comprising:
    means for storing a library of templates;
    means for receiving input symbols for classification in accordance with the stored templates; and
    comparison means for comparing received input symbols with the stored templates and outputting character codes in accordance with the best matching template,
    characterised in that said comparing means is arranged to operate automatically in accordance with a method as claimed in any preceding claim.

42. A storage device for use in an apparatus according to claim 41, wherein are stored a library of templates describing a character font for optical character recognition, said storage device further storing inter-template comparison values for the library.

Fig 1

EP 0 625 764 A2

Providing the Input Vector S

Providing the Library
of T Templates

Selecting an Initial
Template Vector 1stTi

Comparing the Initial
Template Vector 1stTi

Determining an Initial
Comparison Value Range 1stR

Providing
Inter—Template Comparisons

Identifying Template Vectors

Selecting a Second
Template Vector 2ndTi

Comparing the Second
Template Vector 2ndTi

Providing
Inter—Template Comparisons

Identifying Template Vectors

Repeating

Fig 2

30 ⌐

| TT | TT  T1 | TT  T2 | TT  T3 | TT  T4 | o o o | TT  TT |
|----|--------|--------|--------|--------|-------|--------|
|    | o o o  | o o o  | o o o  | o o o  | o o o | o o o  |
|    | o o o  | o o o  | o o o  | o o o  | o o o | o o o  |
| T4 | T4  T1 | T4  T2 | T4  T3 | T4  T4 | o o o | T4  TT |
| T3 | T3  T1 | T3  T2 | T3  T3 | T3  T4 | o o o | T3  TT |
| T2 | T2  T1 | T2  T2 | T2  T3 | T2  T4 | o o o | T2  TT |
| T1 | T1  T1 | T1  T2 | T1  T3 | T1  T4 | o o o | T1  TT |

T ⎰

T1    T2    T3    T4    TT

T

# Fig 3

# Fig 4

T

T1    T2    T3    T4    TT

40 ⌐

| TT | TT  T1 | TT  T2 | TT  T3 | TT  T4 | o o o |  |
|----|--------|--------|--------|--------|-------|--|
|    | o o o  | o o o  | o o o  | o o o  | o o o |  |
|    | o o o  | o o o  | o o o  | o o o  |       |  |
| T4 | T4  T1 | T4  T2 | T4  T3 |        |       |  |
| T3 | T3  T1 | T3  T2 |        |        |       |  |
| T2 | T2  T1 |        |        |        |       |  |
| T1 |        |        |        |        |       |  |

T ⎰

Cs

Ps

50

Rs

Fig 5

Ct

Pt

60

Rt

Fig 6

EP 0 625 764 A2